# EUROPÄISCHE PATENTANMELDUNG

(11) **EP 1 134 786 A2**
(43) Veröffentlichungstag der Anmeldung: **19.09.2001**
(21) Anmeldenummer: 00126338.3
(22) Anmeldetag: 02.12.2000
(51) Int. Cl.: H01J 65/04, H01J 61/10, H01J 61/30, H01J 61/96, H01J 61/12

(54) **Elektrodenlose Entladungslampe**

(30) Priorität: 10.03.2000 DE 20004368 U
(71) Anmelder: Heraeus Noblelight GmbH, 63450 Hanau (DE)
(72) Erfinder: Herter, Beate, Dr., 76137 Karlsruhe (DE)
(74) Vertreter: Kühn, Hans-Christian

(57) **Zusammenfassung**

In einer elektrodenlosen Niederdruck-Entladungslampe mit einem hermetisch abgedichteten Lampen-Kolben (2), wird ein Plasma durch Einkoppelung eines hochfrequenten elektromagnetischen Feldes in das Kolben-Innere gebildet; durch das Plasma erzeugte Strahlung tritt aus dem Kolben entlang einer vorgegebenen optischen Achse (10) durch wenigstens einen als Sammel-Linse ausgebildeten und für UV-Strahlung transparenten Körper (20) in einer ersten Stirnseite (15) des Kolbens aus, wobei im Bereich des Plasmas wenigstens eine Blende (7, 8, 9) mit einer durchgehenden Bohrung entlang der optischen Achse (10) vorgesehen ist.

In einer bevorzugten Ausgestaltung der Entladungslampe ist entlang der optischen Achse (10) ein weiterer transparenter Körper (21) in einer zweiten Stirnseite (16) des Kolbens (2) angeordnet.

Im Bereich der zweiten Stirnseite (16) außerhalb des Lampen-Kolbens (2) ist eine als Temperatur-Strahler (22) ausgebildete zusätzliche Strahlungsquelle vorgesehen, deren Strahlung durch den transparenten Körper (21) in den Kolben (2) eintritt, wobei sowohl die vom Plasma erzeugte Strahlung als auch die Strahlung des Temperatur-Strahlers durch den als Sammel-Linse ausgebildeten ersten transparenten Körper (20) nach außen geführt werden.

## Beschreibung

Die Erfindung betrifft eine elektrodenlose Niederdruck-Entladungslampe mit einem hermetisch abgedichteten Lampen-Kolben, in dem ein Plasma durch Einkoppelung eines hochfrequenten elektromagnetischen Feldes in das Kolben-Innere gebildet wird, und durch das Plasma erzeugte Strahlung aus dem Kolben entlang einer vorgegebenen optischen Achse durch wenigstens einen für UV-Strahlung transparenten Körper in einer ersten Stirnseite des Kolbens austritt, wobei im Bereich des Plasmas wenigstens eine Blende bzw. ein Blendenkörper mit einer durchgehenden Bohrung entlang der optischen Achse vorgesehen ist.

Als elektrodenlose Entladungslampe werden nachfolgend solche Lampen bezeichnet, die im Inneren ihres Lampen-Kolbens keine eigenen Elektroden aufweisen, wobei zum Betrieb der Lampe ein Plasma durch Einkoppelung eines elektromagnetischen Feldes gebildet wird; die Einkoppelung des Feldes kann beispielsweise durch außen auf den Lampen-Kolben aufgebrachte Elektroden auf kapazitive Weise erfolgen. Es ist jedoch auch möglich, eine induktive Einkoppelung des elektromagnetischen Feldes vorzunehmen.

Aus der DE-OS 41 20 730 ist eine elektrodenlose Niederdruckentladungslampe bekannt, in deren Lampen-Kolben ein Plasma durch Einkoppelung eines hochfrequenten elektromagnetischen Feldes gebildet wird und durch das Plasma erzeugte Strahlung aus dem Kolben heraustritt; dabei ist im Bereich des Plasmas ein Blendenkörper aus hochtemperaturbeständigem Werkstoff angeordnet, welcher eine Öffnung zur Einschnürung des Plasmabereiches enthält, wobei der Blendenkörper eine optische Achse durch die Öffnung aufweist, entlang derer die Strahlung austritt. Um bei der Plasmaeinschnürung im Hochfrequenzfeld genügend hohe Strahlungsflüsse und Strahldichten zu erzielen, müssen die Werkstoffe hohe Wandbelastungen vertragen, so daß sie sich bei Temperaturen von mehr als 1500° Kelvin nicht zersetzen, schmelzen, Verunreinigungen freigeben oder gar in Folge des Thermoschocks beim Ein- und Ausschalten der Lampen zerspringen.

Nach der DE-OS 41 20 730 wird vorzugsweise Bornitrit als Werkstoff für den Blendenkörper eingesetzt.

Weiterhin ist aus der GB-PS 10 03 873 eine elektrodenlose Hochfrequenz-Entladungsspektrallampe bekannt, welche einen hohlförmig abgeschlossenen Lampen-Kolben aus lichtdurchlässigem Werkstoff enthält, wobei der Lampen-Kolben in zwei Teile aufgeteilt ist, die mittels einer kapillaren Durchführung miteinander verbunden sind und wobei elektromagnetische Anordnungen zur Erregung einer Entladung innerhalb des im Kolben befindlichen Metalldampfes vorgesehen sind. Die Einkoppelung der elektromagnetischen Energie zur Entladung wird über eine den Lampen-Kolben umgebende Spulenanordnung aufrechterhalten, wobei die eigentliche Zündung über äußere Elektroden erfolgt.

Als problematisch erweisen sich nach der GB-PS die erheblichen Zündprobleme, so daß zusätzliche Elektroden im Außenbereich des Lampen-Kolbens vorgesehen werden müssen, die die Zündung einleiten; eine gerichtete Abstrahlung entlang einer bevorzugten Strahlenachse ist dabei nicht vorgesehen.

Weiterhin ist aus der DE 195 47 519 A1 eine elektrodenlose Niederdruck-Entladungslampe, insbesondere Deuteriumlampe bekannt, die einen zylindersymmetrischen Blendenkörper aufweist, der an seinen Stirnseiten jeweils einen Hohlraum enthält; die beiden Hohlräume sind durch eine Bohrung miteinander verbunden, welche gleichzeitig als Blendenöffnung dient, um das mittels Einkoppelung eines hochfrequenten elektromagnetischen Feldes im Inneren erzeugte Plasma zwecks Intensitätserhöhung der abgegebenen Strahlung einzuschnüren. Beide Stirnseiten des zylindersymmetrischen Blendenkörpers sind mit einer hermetischen Abdichtung versehen, von denen wenigstens eine als Austrittsfelder ausgebildet ist; in einer bevorzugten Ausführungsform erfolgt die Einkoppelung des elektromagnetischen Feldes auf kapazitivem Wege durch auf den Stirnflächen befindliche Elektroden, die wenigstens eine Öffnung für den Austritt der Strahlung aufweisen, sofern sie benachbart zu einem Austrittsfenster angeordnet sind.

Aus der DE 195 47 813 C2 ist ebenfalls eine elektrodenlose Entladungslampe mit Blendenkörper bekannt. Im Entladungsgefäß wird ein Plasma durch Einkoppelung eines hochfrequenten elektromagnetischen Feldes gebildet und durch das Plasma erzeugte Strahlung tritt aus dem Entladungsgefäß durch einen wenigstens für UV-Strahlen durchlässigen Bereich des Entladungsgefäßes aus, wobei im Bereich des Plasmas wenigstens ein Blendenkörper aus hochtemperaturbeständigem Werkstoff angeordnet ist, der wenigstens eine Öffnung zur Einschnürung des Plasma-Bereichs aufweist. Im Plasma-Bereich sind wenigstens zwei Blenden-Öffnungen in einer optischen Achse vorgesehen, entlang derer die Strahlung austritt, wobei zur kapazitiven Einkopplung des elektromagnetischen Feldes das Entladungsgefäß entlang der Strahlen-Achse jeweils an seinen Enden mit einer flächenhaften Elektrode versehen ist; dabei enthält wenigstens eine der Elektroden eine Öffnung im Bereich der Achse des Strahlenaustritts, die einem für UV-Strahlen durchlässigen Austrittsfenster benachbart angeordnet ist.

Als problematisch erweisen sich die bekannten Entladungslampen im Hinblick auf komplette UV-Vis-Lichtquellen für Analysezwecke, wobei eine Lampeneinheit eine Deuterium- und eine Wolframlampe in Durchscheinanordnung aufweist, die zusammen mit Shutter, SMA-Lichtleiteranschluß und Vorschaltgerät für beide Lampen auf einer Leiterplatte enthält. Bei Anordnungen mit zusätzlichen Sammellinsen treten Transmissionsverluste beim Austritt aus einem UV-durchlässigen Fenster und beim Durchlaufen der Sammellinse auf.

Aufgabe der Erfindung ist es, eine möglichst einfache und handliche Strahlenquelle anzugeben, die geringe Transmissionsverluste aufweist und für einen Platinenaufbau im Miniaturformat geeignet ist. Weiterhin soll auf verhältnismäßig einfache Weise die Strahlung in eine Lichtleitfaser eingekoppelt werden können.

Die Aufgabe wird dadurch gelöst, dass der transparente Körper in der ersten Stirnseite des Lampen-Kolbens als Linse ausgebildet ist.

Als vorteilhaft erweist es sich, dass die Transmission des UV-Lichts erheblich verbessert wird; so wird ein Materialdurchgang dadurch eingespart, dass anstelle des bisherigen Durchgangs der Strahlung durch Fenster und Linse nun nur noch ein einziger Durchgang der Strahlung durch Linsenmaterial erforderlich ist. Hieraus ergibt sich neben einem vereinfachten Aufbau auch eine verbesserte Lichtausbeute.

Vorteilhafte Ausgestaltungen der Erfindung gemäß Anspruch 1 sind in den Ansprüchen 2 bis 13 angegeben.

In einer bevorzugten Ausführungsform ist wenigstens eine Linse als für UV-Strahlung durchlässiger Körper ausgebildet. Dabei ist entlang der optischen Achse ein weiterer transparenter Körper im Bereich einer zweiten Stirnseite des Kolbens angeordnet, wobei die transparenten Körper in ihrem Randbereich mit ihrer jeweiligen Stirnseiten des Kolbens eine hermetisch dichte Verbindung bilden.

Zur kapazitiven Einkoppelung des elektromagnetischen Feldes ist der Lampen-Kolben entlang seiner Achse jeweils an seinen Enden bzw. Stirnseiten mit einer flächenhaften Elektrode versehen, wobei jede der Elektroden eine Öffnung im Bereich der Achse des Strahlenaustritts enthält, die dem Strahlenaustritt benachbart angeordnet ist.

In einer bevorzugten Ausgestaltung ist entlang der optischen Achse im Bereich der zweiten Stirnseite außerhalb des Lampen-Kolbens eine als Temperatur-Strahler ausgebildete zusätzliche Strahlungsquelle angeordnet, deren Strahlung durch den transparenten Körper der zweiten Stirnseite in den Kolben eintritt, wobei sowohl die vom Plasma erzeugte Strahlung als auch die Strahlung des Temperatur-Strahlers durch den transparenten Körper der ersten Stirnseite nach außen geführt werden.

Der Temperatur-Strahler ist entlang der Strahlenachse angeordnet, wobei durch die Blendenöffnung des Strahlenaustritts auch Strahlung des Temperatur-Strahlers geführt wird, dies bedeutet, dass sowohl die vom Plasma erzeugte Strahlung als auch die Strahlung des Temperatur-Strahlers durch den als UV-durchlässige Linse ausgebildeten ersten transparenten Körper im Strahlenaustritt geführt werden.

Die Blendenöffnung des Strahlenaustritts ist kreisförmig ausgebildet, wobei ihr Durchmesser im Bereich von 0,1 bis 6 mm liegt; der Blendenkörper besteht vorzugsweise aus Aluminiumoxid, Aluminiumnitrid, Bornitrid; er kann jedoch auch aus Thoriumoxid, Berylliumoxid, polykristallinem Diamant oder einem hochschmelzenden Metall wie Molybdän oder Wolfram bestehen.

Die UV-durchlässige Linse und das Fenster des Strahleneintritts bestehen vorzugsweise aus Quarzglas, UV-durchlässigem Glas oder Saphir.

Als Füllung des Lampenkolbens ist vorzugsweise Deuterium mit einem Kaltfülldruck von 1 bis 100 mbar vorgesehen. Die Elektroden sind an einem Hochfrequenz-Generator angeschlossen, der eine Anregungsfrequenz im Bereich von 0,1 KHz bis 2450 MHz erzeugt.

Weiterhin werden vorteilhafterweise Einsparungen von Materialkosten und Verarbeitungskosten dadurch erzielt, dass nunmehr ein auch als Sammel-Linse dienendes Austrittsfenster verwendet wird, wobei sich zusätzlich der Kalibrieraufwand für eine sachgemäße und positionsrichtige Anbringung der Linse in einem bestimmten Abstand zur Lampe entfällt.

Ein weiterer Vorteil ist in der Erfassung eines größeren Raumwinkels des abgestrahlten Lichts zu sehen, dadurch dass die Linse näher an die strahlenden Plasmakugeln im Bereich der Blende herangeführt ist. Auch hieraus ergibt sich eine erhöhte Lichtausbeute.

Weiterhin lässt sich der bisher zwischen Entladungslampe und Sammellinse befindliche Raum nunmehr für ein erhöhtes Gasvolumen der Entladungslampe nutzen, so dass bei gleichem Platzbedarf eine höhere Lebensdauer der Entladungslampe erreicht werden kann.

Im folgenden ist der Gegenstand der Erfindung anhand der Figuren 1 bis 4 näher erläutert.

Figur 1 zeigt schematisch einen Längsschnitt durch die erfindungsgemäße Entladungslampe zusammen mit einem teilweise gebrochen dargestellten Temperatur-Strahler;

Figur 2 zeigt schematisch eine Anordnung der Entladungslampe auf einer Leiterplatte in einer Vorrichtung für handliche Spektroskopie.

Figur 3 zeigt im Diagramm die Lichtleistung in Prozent als Funktion der Wellenlänge.

In Figur 4 ist anhand eines Blockschaltbildes der Einsatz einer Strahlungsanordnung mit einer Niederdruck-Entladungslampe und einem thermischen Strahler für spektrographische Messungen schematisch dargestellt.

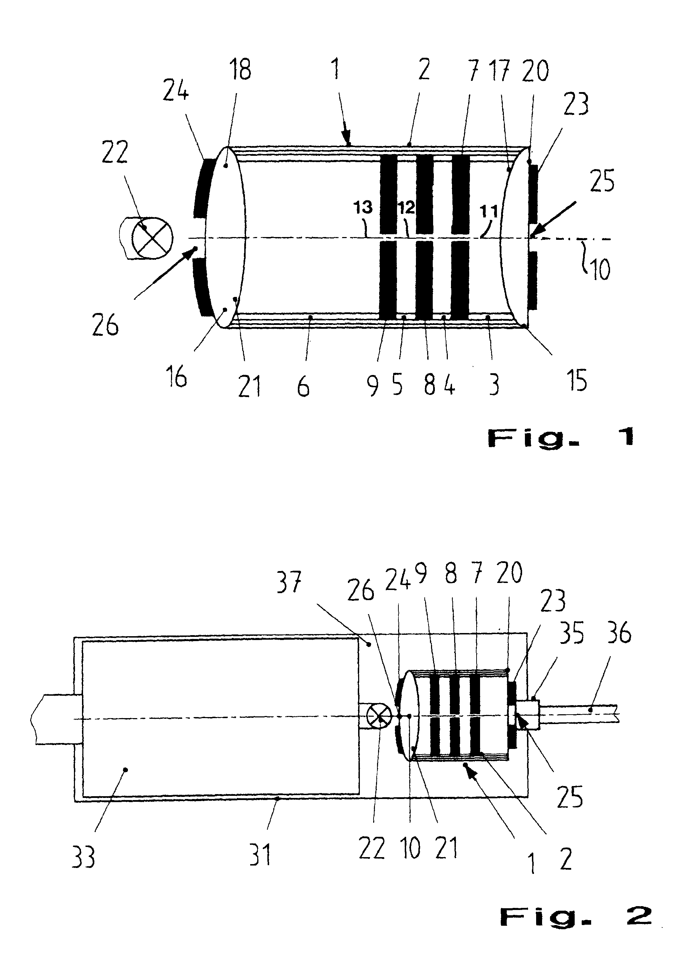

Figur 1 zeigt die Entladungs-Lampe 1 im Längsschnitt mit einem zylindersymmetrischen Lampen-Kolben 2 und darin befindlichen Abstandsringen 3, 4, 5, 6, wobei zwischen den Abstandsringen 3 und 4, 4 und 5 sowie 5 und 6 jeweils eine Blende 7, 8, 9 angeordnet ist, welche eine entlang einer optischen Achse 10 verlaufende Blendenöffnung 11, 12, 13 aufweist. Der Lampen-Kolben 2 ist an seinen beiden Stirnseiten 15, 16 jeweils mit einer Öffnung 17, 18 versehen, die jeweils durch einen ersten und zweiten transparenten Körper 20, 21 gasdicht abgeschlossen sind. Durch Öffnung 17 und den als Linse ausgebildeten für UV-Strahlung transparenten Körper 20 wird Strahlung aus dem Inneren des Kolbens 2 entlang der optischen Achse 10 nach außen emittiert. Dabei dient die zweite Öffnung 18 zur Einkopplung einer von außen entlang der optischen Achse 10 in den Kolben 2 eingeführten Strahlung und zwar von einem hier symbolisch dargestellten Temperatur-Strahler 22, wie es beispielsweise aus Figur 2 der DE 195 47 519 A1 bekannt ist; die erste Öffnung 17 ist somit zum Strahlenaustritt sowohl der im Inneren der Lampe 1 erzeugten sowie der von außen in den Lampen-Kolben 2 eingebrachten Strahlung vorgesehen. Die Austritts-Öffnung 17 weist dabei als transparenten Körper 20 eine UV-strahlungsdurchlässige Sammel-Linse auf, wobei der Innenraum des Lampen-Kolbens 2 mittels der Sammel-Linse 20 in der ersten Stirnseite 15 und des transparenten Körpers 21 in der zweiten Stirnseite 16 gegenüber der äußeren Umgebung atmosphärisch abgeschlossen ist.

Die Einkoppelung des elektromagnetischen Feldes erfolgt auf kapazitive Weise über flächenhaft ausgebildete Elektroden 23, 24, die entlang der optischen Achse 10 auf den Stirnseiten 15, 16 des Lampen-Kolbens 2 aufgebracht sind; die Elektrode 24 weist auf der Stirnseite 16 für die Einbringung der vom Temperatur-Strahler 22 abgegebenen Strahlung eine gegenüber der Kolben-Öffnung 18 verkleinerte Öffnung 26 auf, während die Elektrode 23 auf Stirnseite 15 eine gegenüber Kolben-Öffnung 17 verkleinerte Öffnung 25 zur Ausgabe der UV-Strahlung und der vom Temperatur-Strahler erzeugten Strahlung aufweist.

In Figur 2 ist ein UV-VIS-Lichtquellen-Modul 31 zur Ausgabe von UV-Strahlung und sichtbarem Licht dargestellt, das eine Entladungslampe 1 für UV-Strahlung, einen Temperatur-Strahler 22, sowie ein elektrisches Vorschaltgerät 33 zur Ansteuerung von Entladungslampe 1 und Temperatur-Strahler aufweist; das Lichtquellen-Modul 31 ist auf einer kleinen handlichen Leiterplatte 37 untergebracht und nimmt nur eine verhältnismäßig geringe elektrische Leistung auf, so dass ein Betrieb des Moduls 31 unabhängig vom stationären Versorgungsnetz mit Hilfe einer Batterie oder eines Akkumulators möglich ist; anhand Figur 2 ist erkennbar, dass entlang der optischen Achse 10 auf der zum Vorschaltgerät 33 gerichteten Seite der Entladungslampe 1 der Temperatur-Strahler 22 - in Form einer Miniaturglühlampe bzw. Halogenlampe - aufgebracht ist, wobei zur Einkopplung der vom Temperatur-Strahler 22 ausgehenden Strahlung in das Innere des Lampen-Kolbens 2 die Öffnung 26 in Elektrode 24 an der zweiten Stirnseite der Entladungs-lampe 1 vorgesehen ist. Der Lampen-Betrieb wird durch Vorschaltgerät 33 gewährleistet, welches sowohl die Entladungslampe 1 als auch die Miniaturhalogenlampe als Temperatur-Strahler 22 mit Strom versorgt. Im Bereich der Öffnung 25 von Elektrode 23 der Entladungs-lampe 1 befindet sich ein nach außen führender Lichtleiteranschluss 35, welcher direkt dem transparenten Körper 20 als Linse zugeordnet ist. Mit Lichtleiteranschluss 35 ist ein Lichtleiter 36 verbunden, welcher sich insbesondere für phasengekoppelte UV-VIS-Spektrometersysteme mit Anwendungen z.B. in der Wasseranalyse, Diagnose und im Umweltbereich eignet.

Das Lichtquellen-Modul 31 befindet sich somit auf einer Leiterplatte 37, welche die komplette Lampeneinheit aus Entladungslampe 1, Temperatur-Strahler 22, einen steuerbaren Verschluss (Shutter), Einkoppeloptik mit einem SMA-Lichtschalteranschluss und Vorschaltgerät 33 zum Betrieb der beiden Lampen aufweist.

Als besonders vorteilhaft erweist es sich, dass beide Lampen für sich und der Verschluss jeweils getrennt voneinander angesteuert werden können.

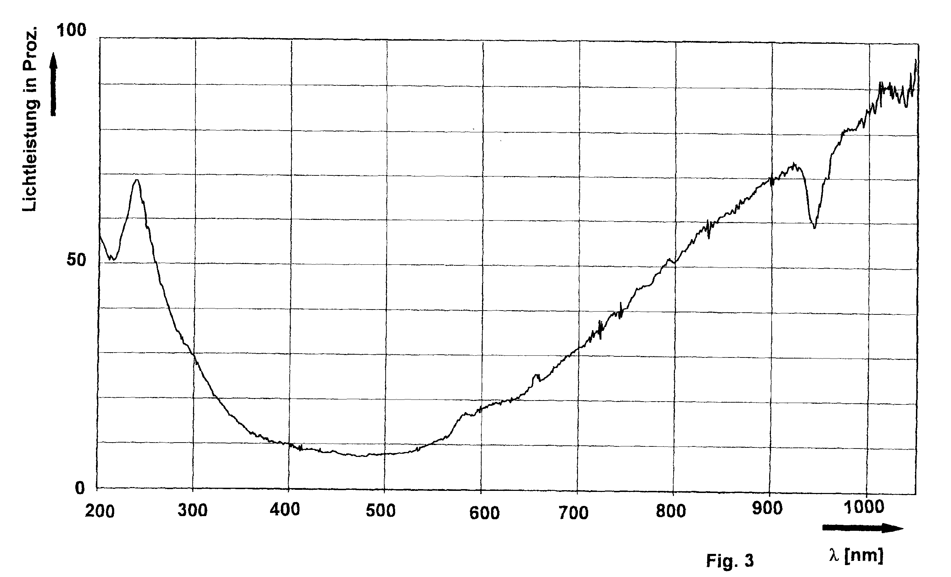

Anhand Figur 3 ist das Spektrum der aus Lichtquellenmodul 31 (Figur 2) austretenden Strahlung dargestellt, wobei die Wellenlänge λ in Nanometern angegeben ist, während die Lichtleistung in relativen Einheiten von 0 bis 100 % (Prozent) angegeben ist.

Gemäß dem linken Teil des Diagramms wird durch eine Deuteriumlampe als Entladungslampe ein Spektrum im Bereich von 200 bis 400 nm erzeugt, während das Spektrum der als Temperatur-Strahler dienenden Halogen-Wolframlampe sich über den Bereich von 300 bis 1100 nm erstreckt. Somit wird ein Spektralbereich von 200 bis 1100 nm für Analysezwecke gebildet, wobei das Spektrum der Lichtquelle über Lichtleiter mit Hilfe eines Detektors ermittelt wird.

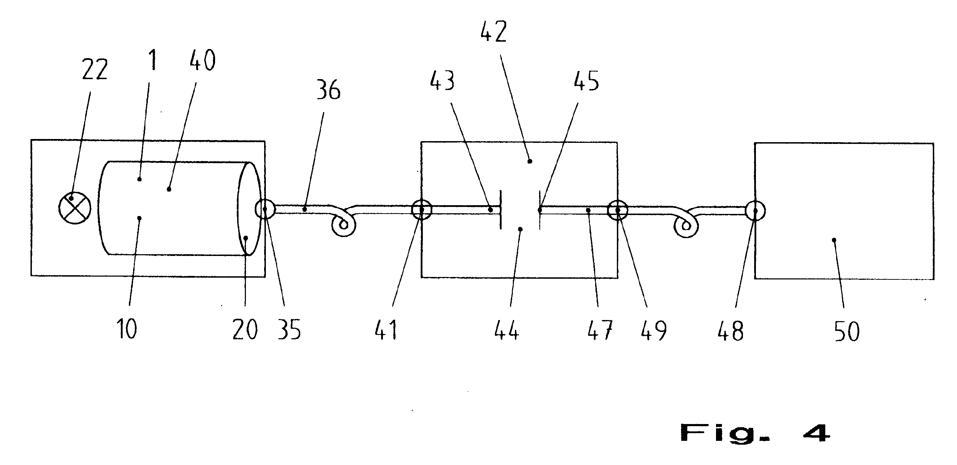

Als besonders vorteilhaft erweist es sich, dass eine als Deuteriumlampe ausgebildete Entladungslampe ein Kontinuum im kurzwelligen UV-Bereich erzeugt, so dass die Entladungslampe im Zusammenwirken mit der als Temperatur-Strahler ausgebildeten Glühlampe (Halogenlampe) als ein geeignetes Hilfsmittel zur Analyse unterschiedlicher Substanzen wie beispielsweise von Gasen oder von Flüssigkeiten dienen kann, wobei die eigentliche Analyse durch einen eigenen Sensor erfolgt, wie nachstehend anhand Figur 4 erläutert wird.

Prinzipiell schließt sich der Sensor an den Lichtwellenleiter und eine Kapillare an und bildet zusammen mit der Lichtquelle eine Analyseeinheit.

Somit erstreckt sich der für Analysezwecke benutzbare Spektralbereich von 200 bis ca. 1050 nm, welches einem Spektrum vom UV-C-Bereich bis zum nahen Infrarotbereich entspricht; in Figur 3 ist auch die für das Auge sichtbare Strahlung mit einem Bereich zwischen 400 und 700 nm angegeben.

Gemäß Figur 4 weist eine zur Anregung dienende Strahleranordnung 40 eine Entladungslampe 1 sowie einen Temperaturstrahler 22 auf, welche (entsprechend Figur 2) entlang einer optischen Achse 10 angeordnet sind, wobei die optische Achse den als Sammellinse ausgebildeten schematisch dargestellten transparenten Körper 20 durchschneidet. Weiterhin befindet sich auf der optischen Achse 10 der Lichtleiteranschluss 35, welcher zur Ankopplung eines Lichtwellenleiters 36 dient. Der Lichtwellenleiter 36 tritt über Eingang 41 in eine Küvette 42 ein, in welcher sich ein Probegut befindet, wobei aus der Spitze 43 des Lichtwellenleiters 36 austretende Strahlung in das Probemedium 44 gelangt und über die entlang einer optischen Achse liegende Spitze 45 eines nachfolgenden Lichtwellenleiters 47 aus der Küvette 42 herausgeführt wird; in der Praxis wird beispielsweise bei der Analyse von Brauchwasser bzw. nicht trübem Abwasser ein Abstand von beispielsweise 10 mm zwischen den Spitzen angewendet. Über Lichtwellenleiter 47 und Ausgang 49 wird die nicht absorbierte Strahlung zum Eingang 48 eines Analysators 50 gebracht, wobei dieser mit Hilfe des absorbierten Spektrums eine Analyse des in Küvette 42 befindlichen Probenmaterials liefert.

Ein wesentlicher Vorteil des Einsatzes von Lichtwellenleitern zu und von Küvette 42 ist darin zu sehen, dass es völlig unproblematisch ist, auch Flüssigkeiten bzw. auch aggressive Substanzen einer Absorptionsmessung zu unterziehen, ohne dass irgendwelche empfindlichen elektrischen bzw. elektronisch optischen Bestandteile der Strahlungsanordnung 40 oder des Analysators 50 in Mitleidenschaft gezogen werden können.

## Patentansprüche

1. Elektrodenlose Niederdruck-Entladungslampe mit einem hermetisch abgedichteten Lampen-Kolben (2), in dem ein Plasma durch Einkoppelung eines hochfrequenten elektromagnetischen Feldes in das Kolben-Innere gebildet ist, und durch das Plasma erzeugte Strahlung aus dem Kolben entlang einer vorgegebenen optischen Achse (10) durch wenigstens einen für UV-Strahlung transparenten Körper (20) in einer ersten Stirnseite (15) des Kolbens austritt, wobei im Bereich des Plasmas wenigstens eine Blende (7, 8, 9) mit einer durchgehenden Bohrung entlang der optischen Achse (10) vorgesehen ist, **dadurch gekennzeichnet, dass** der transparente Körper (20) in der ersten Stirnseite (15) des Kolbens als Linse ausgebildet ist.

2. Entladungslampe nach Anspruch 1, **dadurch gekennzeichnet, dass** der transparente Körper (20) als Sammel-Linse ausgebildet ist.

3. Entladungslampe nach Anspruch 1 oder 2, **dadurch gekennzeichnet, dass** entlang der optischen Achse (10) ein weiterer transparenter Körper (21) in einer zweiten Stirnseite (16) des Kolbens (2) angeordnet ist.

4. Entladungslampe nach einem der Ansprüche 1 bis 3, **dadurch gekennzeichnet, dass** wenigstens einer der transparenten Körper (20, 21) in seinem Randbereich mit einer der Stirnseiten des Kolbens (2) eine hermetisch dichte Verbindung bildet.

5. Entladungslampe nach einem der Ansprüche 1 bis 4, **dadurch gekennzeichnet, daß** zur kapazitiven Einkoppelung des elektromagnetischen Feldes der Kolben (2) entlang der optischen Achse (10) jeweils im Bereich seiner Stirnseiten (15, 16) mit einer Elektrode (23, 24) versehen ist, wobei jede der Elektroden (23, 24) eine Öffnung (25, 26) im Bereich der Achse (10) der transparenten Körper (20, 21) enthält.

6. Entladungslampe nach einem der Ansprüche 1 bis 5, **dadurch gekennzeichnet, dass** entlang der optischen Achse (10) im Bereich der zweiten Stirnseite (16) außerhalb des Lampen-Kolbens (2) eine als Temperatur-Strahler (22) ausgebildete zusätzliche Strahlungsquelle angeordnet ist, deren Strahlung durch den transparenten Körper (21) in den Kolben (2) eintritt, wobei sowohl die vom Plasma erzeugte Strahlung als auch die Strahlung des Temperatur-Strahlers durch den ersten transparenten Körper (20) nach außen geführt werden.

7. Entladungslampe nach einem der Ansprüche 1 bis 6, **dadurch gekennzeichnet, dass** die wenigstens eine Öffnung der Blenden (7, 8, 9) kreisförmig ausgebildet ist, wobei ihr Durchmesser im Bereich von 0,1 bis 6 mm liegt.

8. Entladungslampe nach einem der Ansprüche 1 bis 7, **dadurch gekennzeichnet, dass** der wenigstens eine Blendenkörper (7, 8, 9) aus Aluminiumoxid, Aluminiumnitrid, Bornitrid besteht.

9. Entladungslampe nach einem der Ansprüche 1 bis 7, **dadurch gekennzeichnet, dass** wenigstens eine Blende (7, 8, 9) aus Thoriumoxid, Berylliumoxid oder polykristallinem Diamant besteht.

10. Entladungslampe nach einem der Ansprüche 1 bis 7, **dadurch gekennzeichnet, dass** wenigstens eine Blende (7, 8, 9) aus hochschmelzendem Metall, insbesondere aus Molybdän oder Wolfram, besteht.

11. Entladungslampe nach einem der Ansprüche 1 bis 10, **dadurch gekennzeichnet, dass** die transparenten Körper (20, 21) aus Quarzglas oder UV-durchlässigem Glas oder Saphir bestehen.

12. Entladungslampe nach einem der Ansprüche 1 bis 11, **dadurch gekennzeichnet, daß** als Füllung des Lampen-Kolbens (2) Deuterium mit einem Kaltfülldruck von 1 bis 100 mbar vorgesehen ist.

13. Entladungslampe nach einem der Ansprüche 1 bis 12, **dadurch gekennzeichnet, daß** die Elektroden (23, 24) an einem Hochfrequenz-Generator angeschlossen sind, der eine Anregungsfrequenz im Bereich von 0,1 KHz bis 2450 MHz erzeugt.
